# EUROPEAN PATENT APPLICATION

(11) **EP 1 921 464 A2**
(43) Date of publication of application: **14.05.2008**
(21) Application number: 07021455.6
(22) Date of filing: 05.11.2007
(51) Int. Cl.: G01S 7/521, B06B 1/06, G10K 9/122, G01S 15/93

(54) **Sensor device, particularly for applications in parking aid, anti-break in systems or the like**

(30) Priority: 07.11.2006 IT MO20060361
(71) Applicant: Meta System S.p.A., 42100 Reggio Emilia (IT)
(72) Inventor: Simonazzi, Giuseppe, 42100 Reggio Emilia (IT)
(74) Representative: Feltrinelli, Secondo Andrea

(57) **Abstract**

The sensor device, particularly for applications in parking aid, anti-break in systems or the like, comprising at least one transducer element of the piezoelectric type suitable for transmitting at least one ultrasonic signal and/or for receiving an echo signal reflected by at least one obstacle, electronic connection means associated with the transducer element and associable with at least one processing and control unit and one at least partial-containment body of the transducer element, the containment body being made of polymer material.

## Description

The present invention refers to a sensor device, particularly for applications in parking aid, anti-break in systems or the like.

The use is known of proximity sensors suitable, for example, for detecting the presence of persons in anti-break in systems located inside homes or inside the passenger compartments of motor vehicles or suitable for detecting the position of obstacles in parking aid systems installed on motor vehicles.

A particular type of such sensors entails the sending of an ultrasonic signal and the reception of any echo signals reflected by one or more objects.

Such ultrasonic sensors generally comprise a capsule made of metal material such as aluminium, containing a transducer element of the piezoelectric type suitable for converting an electric signal into a respective ultrasonic signal and vice versa.

Generally, the capsule has a cylindrical shape and comprises a portion of flat surface suitable for the transmission and reception of ultrasonic signals and a substantially opposite portion having an electrical connection element of the type, for example, of a pair of metal terminals or, alternatively, a pair of leads terminating in a connection socket.

With particular reference to parking aid systems, the capsule is commonly housed inside a support made of polymer material; this support is suitably shaped and associable with the rear and/or front bumper bar of a motor vehicle with the above transmission and reception surface of the capsule turned outwards.

These known sensors are however susceptible to upgrading, in particular in order to allow the manufacture of capsules of different shapes and sizes by means of simple machining processes.

The main aim of the present invention is to provide a sensor device, particularly for applications in parking aid, anti-break in systems, or the like that can be made in different shapes and sizes by means of simple production processes.

In the ambit of such technical aim, another object of the present invention is to provide a sensor device of relatively low cost.

The above objects are all reached by the present sensor device, particularly for applications in parking aid, anti-break in systems or the like, comprising at least one transducer element of the piezoelectric type suitable for transmitting at least one emitted signal and/or for receiving a signal reflected by at least one obstacle, electronic connection means associated with said transducer element and associable with at least one processing and control unit and one at least partial-containment body of said transducer element, characterized in that said containment body is made of polymer material.

Further characteristics and advantages of the present invention will appear more evident from the detailed description of five preferred but not exclusive embodiments of a sensor device, particularly for applications in parking aid, anti-break in systems or the like, illustrated indicatively by way of non limiting example, in the attached drawings wherein:
figure 1 is a perspective view of a first embodiment of the sensor device according to the invention;
figure 2 is a side and section view of the first embodiment of the sensor device according to the invention;
figure 3 is a partial exploded and side view of a second embodiment of the sensor device according to the invention;
figure 4 is a side view of a third embodiment of the sensor device according to the invention;
figure 5 is a side view of a fourth embodiment of the sensor device according to the invention;
figures 6 and 7 are a plan view and a side and section view of a fifth embodiment of the sensor device according to the invention.

With particular reference to such figures, by 1 has been globally indicated a sensor device usable for applications such as, for example, the proximity and/or position detection in parking aid systems on motor vehicles or in anti-break in systems.

The sensor device 1 comprises a transducer element 2, of the type of a piezoelectric crystal plate, able to transmit at least one ultrasonic signal and to receive one or more echo signals possibly reflected by an obstacle.

Electronic connection means 3 are associated with the transducer element 2 and permit the connection to a processing and control unit, of the type of a central unit or the like, to control the ultrasonic signals transmitted and for the parametric processing of the echo signals received.

The electronic connection means 3 are made up of a pair of rheophores extending from the transducer element 2 substantially parallel to each other. Different types of electronic connection means cannot however be ruled out of the type, for example, of a pair of leads connected to the transducer element 2 and terminating in a connection socket.

Advantageously, the sensor device 1 comprises a body 4, substantially cylindrical, made of polymer material and suitable for at least partially containing the transducer element 2.

Usefully, the body 4 can be made in a single body piece using a material of a single type or, alternatively, can be made using a composite type polymer material, meaning a material obtained combining different materials with different technical characteristics.

Furthermore, the device 1 can be made by co-moulding between the body 4 and the transducer element 2.

In particular, the body 4 comprises a first extremal portion 4a for housing the transducer element 2 suitable for transmitting the ultrasonic signals emitted and for receiving the echo signals reflected.

During use of the sensor device 1, the outer and substantially flat surface of the first portion 4a is normally turned towards the area to be controlled, meaning, in the specific case of the fitting of the sensor device 1 to the bumper bar of a motor vehicle in parking aid systems, towards the outside, to detect the presence of any objects near the motor vehicle.

The body 4 also comprises a second extremal portion 4b, substantially opposite the above first portion 4a and having a connection terminal 5 of the electronic connection means 3 to a processing and control unit, of the type of a central unit or the like. In particular, the connection terminal 5 is made of the free ends of the rheophores 3 protruding from the second portion 4b of the body 4. Different embodiments of the connection terminal 5 cannot however be ruled out.

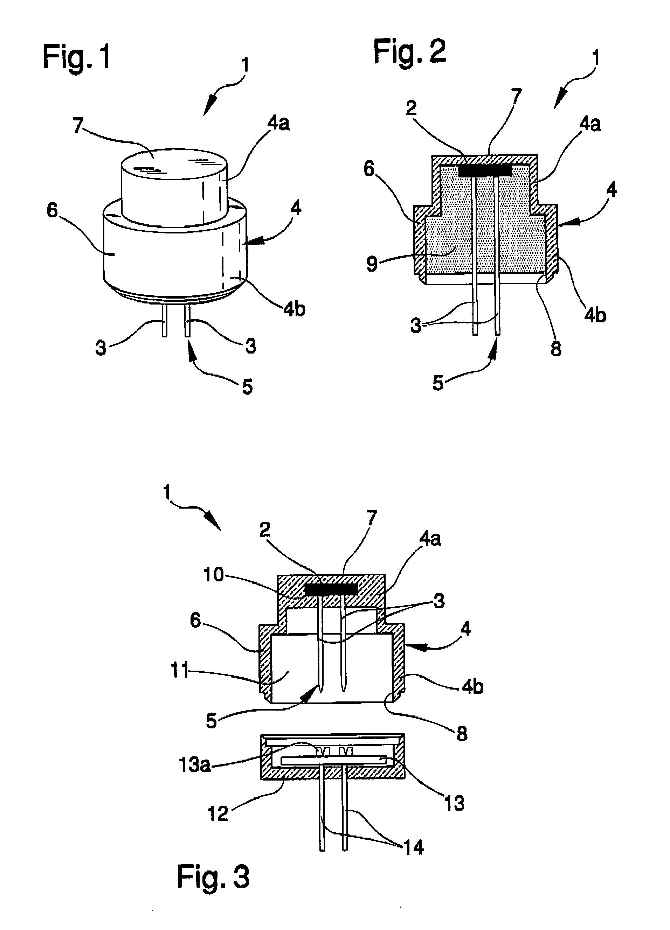

With special reference to a first embodiment of the sensor device 1, illustrated in the figures 1 and 2, the body 4 comprises an outer shell 6, made of thermoplastic material, substantially cylindrical and having a substantially flat outer transmission/reception surface 7 defined at the first portion 4a and an opening 8 defined at the second portion 4b substantially opposite the transmission/reception surface 7.

The transducer element 2 is associated with the inner surface of the shell 6 at the transmission/reception surface 7, by placing in between, for example, a layer of adhesive.

The body 4 also comprises an inner portion 9 that occupies the inner volume delimited by the shell 6 and which can be made, for example, in materials such as silicone or rubber. The rheophores 3 extend from the transducer element 2, through such inner portion 9, until they partially protrude from the opening 8.

Alternatively, the body 4 can be made entirely of a single piece of thermoplastic material and can have a closed cavity for housing the transducer element 2 at the first portion 4a and close to the transmission/reception surface 7.

In a second embodiment of the sensor device 1, illustrated in figure 3, the transducer element 2 is housed inside a seat 10, made up of a closed cavity and defined on a wall of the shell 6, at the first portion 4a and close to the transmission/reception surface 7.

Usefully, a pair of through holes permits transit of the rheophores 3 from the seat 10 to an inner chamber 11 of the shell 6.

The second embodiment also envisages the closing of the opening 8 by means of a half-shell 12, associable in a non-removable or removable way with the second portion 4b of the shell 6 to define the above inner chamber 11.

In particular, in an assembled configuration, the half-shell 12 is associated along the perimeter of the opening 8 by means of welding or, alternatively, by placing interlocking means in between.

Advantageously, the half-shell 12 comprises an electronic interconnecting element 13 between the free ends of the rheophores 3, arranged close to the opening 8, and a supplementary connection terminal 14 made up of a pair of supplementary rheophores that extend towards the outside of the half-shell 12, through respective through holes, for the electronic connection to the processing and control unit.

In particular, the electronic interconnecting element 13 is made up of a substantially disc-shaped support made of polymer material fastened at the bottom of the half-shell 12, to which are fixed respective inner ends of the supplementary rheophores 14. Usefully, the support 13 has a pair of invitation housings 13a of the free ends of the rheophores 3, for the correct positioning in contact with the inner ends of the supplementary rheophores 14 in the assembled configuration between the shell 6 and the half-shell 12.

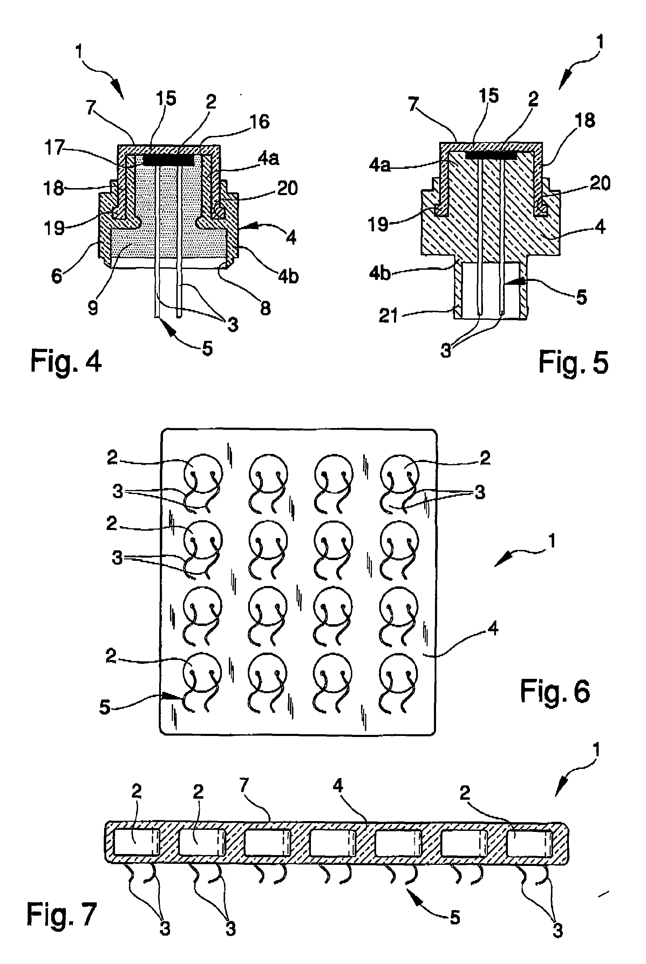

In a third and in a fourth embodiment, illustrated respectively in the figures 4 and 5, the sensor device 1 comprises a lamina 15 made of metal material, of the aluminium, or metal alloy type, which is associated with the body 4 at the first portion 4a.

In particular, in the third embodiment of figure 4, the body 4 comprises a shell 6 in thermoplastic material, substantially cylindrical and having a first opening 16 defined at the first portion 4a and a second opening 8 defined at the second portion 4b. The body 4 also comprises an inner portion 9 made of material such as, for example, silicone or rubber.

The transducer element 2 is housed inside a seat 17 on the inner portion 9 and is facing towards the outside of the first opening 16.

The lamina 15 is arranged at the first opening 16, to define a substantially flat transmission/reception surface 7 and has a surround edge 18 that extends along part of the outer side surface of the shell 6. The surround edge 18 has a ring-shaped protrusion 19 which is interlocked into a complementary ring-shaped housing 20 on the side wall of the shell 6 to fix the lamina 15 to the body 4.

The fourth embodiment, illustrated in figure 5, is made in the same way as the above-described third embodiment, with the body 4 made in a single piece and completely of thermoplastic material.

Advantageously, the second portion 4b has a connector 21 associable removable with at least one complementary connector on electronic means for the transmission of electric signals from and towards the processing and control unit. This connector 21 is made up of a cylindrical appendix protruding from the second portion 4b and delimiting a housing cavity of the free ends of the rheophores 3.

Finally, in a fifth embodiment, illustrated in the figures 6 and 7, the sensor device 1 comprises a substantially plate-shaped body 4 and having a plurality of seats for housing respective transducer elements 2 arranged substantially aligned the one with the other.

It has in fact been ascertained how the described invention achieves the proposed objects and in particular, the fact is underlined that the use of materials of the polymer type such as thermoplastic materials, instead of metal materials, permits making a transducer element containment body of different shape and size while maintaining, at the same time, a low complexity of the production processes.

Another advantage is that of being able to shape the body for the realisation of a sensor device installable without the aid of the supplementary supports normally required.

The realisation of the body in a single piece, obtained by the co-moulding of the containment body and the transducer element, also permits reducing the number of working phases, with the consequent further simplification of the production processes and cutting of manufacturing costs.

A further advantage consists of the particular positioning of the transducer element inside the body, as well as the shape of the body itself, which permit a substantially single-direction transmission of the ultrasonic signals emitted, minimising the presence of disturbances for a reliable parametric evaluation of the echo signals received.

In fact, the positioning of the transducer element near the transmission/reception surface and the distribution towards the second portion of a mass of polymer material, in particular of a uniform mass of thermoplastic material, permit the transmission of the ultrasonic signals towards the outside and through the transmission/reception surface and the damping of the ultrasonic signals transmitted in the opposite direction.

The invention thus conceived is susceptible of numerous modifications and variations, all of which falling within the scope of the inventive concept.

Furthermore all the details may be replaced by other elements which are technically equivalent.

In practice, the materials used as well as the contingent shapes and dimensions may be any according to requirements without because of this moving outside the protection scope of the following claims.

## Claims

1. Sensor device, particularly for applications in parking aid, anti-break in systems or the like, comprising at least one transducer element of the piezoelectric type suitable for transmitting at least one ultrasonic signal and/or for receiving an echo signal reflected by at least one obstacle, electronic connection means associated with said transducer element and associable with at least one processing and control unit and one at least partial-containment body of said transducer element, **characterized in that** said containment body is made of polymer material.

2. Device according to claim 1, **characterized in that** said body comprises at least a first extremal portion for housing said transducer element suitable for transmitting and/or receiving said ultrasonic signal emitted and said echo signal reflected respectively.

3. Device according to one or more of the preceding claims, **characterized in that** said body comprises at least a second extremal portion having a connection terminal of said connection means to said processing and control unit.

4. Device according to one or more of the preceding claims, **characterized in that** said body is made in a single body piece.

5. Device according to one or more of the preceding claims, **characterized in that** said polymer material is of the composite type.

6. Device according to one or more of the preceding claims, **characterized in that** it is made by co-moulding between said body and said transducer element.

7. Device according to one or more of the preceding claims, **characterized in that** said body comprises at least one outer shell.

8. Device according to one or more of the preceding claims, **characterized in that** said shell is made of a material of the plastic type or the like.

9. Device according to one or more of the preceding claims, **characterized in that** said shell is made of thermoplastic type material.

10. Device according to one or more of the preceding claims, **characterized in that** said body comprises an inner portion of said shell made in materials of the type of silicone, rubber or the like.

11. Device according to one or more of the preceding claims, **characterized in that** said body is made entirely of a material of the plastic type or the like.

12. Device according to one or more of the preceding claims, **characterized in that** said body is made entirely of a thermoplastic type material.

13. Device according to one or more of the preceding claims, **characterized in that** said transducer element is associated with the inner surface of said shell at said first portion.

14. Device according to one or more of the preceding claims, **characterized in that** said transducer element is associated with said inner surface of the shell by placing in between at least one layer of adhesive.

15. Device according to one or more of the preceding claims, **characterized in that** said transducer element is housed inside a seat defined on a wall of said shell at said first portion.

16. Device according to one or more of the preceding claims, **characterized in that** said seat is a closed cavity.

17. Device according to one or more of the preceding claims, **characterized in that** said shell comprises at least one opening defined at said second portion.

18. Device according to one or more of the preceding claims, **characterized in that** said body comprises a half-shell associable with the second portion of said shell for closing said opening.

19. Device according to one or more of the preceding claims, **characterized in that** said half-shell comprises a supplementary connection terminal associable with the connection terminal of said electronic connection means.

20. Device according to one or more of the preceding claims, **characterized in that** it comprises at least one lamina made of metal material or metal alloy associated with said body by at least a part of the outer surface of said first portion.

21. Device according to one or more of the preceding claims, **characterized in that** said lamina is made of aluminium.

22. Device according to one or more of the preceding claims, **characterized in that** said electronic connection means comprise at least one pair of rheophores having respective ends associated with said transducer element and opposite ends arranged close to said second portion.

23. Device according to one or more of the preceding claims, **characterized in that** said connection terminal is composed of said protruding ends of said rheophores.

24. Device according to one or more of the preceding claims, **characterized in that** said supplementary connection terminal comprises at least one electronic interconnecting element between the free ends of said rheophores and a pair of supplementary rheophores that extend towards the outside of said half-shell.

25. Device according to one or more of the preceding claims, **characterized in that** said first portion and said second portion are substantially opposite.

26. Device according to one or more of the preceding claims, **characterized in that** said containment body comprises a plurality of seats for housing respective transducer elements.
